# EUROPEAN PATENT SPECIFICATION

(11) **EP 4 147 888 B1**
(45) Date of publication and mention of the grant of the patent: **29.05.2024**
(21) Application number: 21208343.0
(22) Date of filing: 15.11.2021
(51) Int. Cl.: B60G 13/00, B60G 15/06, B60G 21/02, B60G 21/05

(54) **ROLLING DAMPER, RESPECTIVE SUSPENSION SYSTEM WITH ASYMMETRIC ROLLING MOVEMENT AND SYMMETRIC VERTICAL MOVEMENT, MOUNTING METHOD THEREOF**
ROLLDÄMPFER, ZUGEHÖRIGES AUFHÄNGUNGSSYSTEM MIT ASYMMETRISCHER ROLLBEWEGUNG UND SYMMETRISCHER VERTIKALBEWEGUNG, MONTAGEVERFAHREN DAFÜR
AMORTISSEUR DE ROULEMENT, SYSTÈME DE SUSPENSION RESPECTIF À MOUVEMENT DE ROULEMENT ASYMÉTRIQUE ET MOUVEMENT VERTICAL SYMÉTRIQUE, PROCÉDÉ DE MONTAGE CORRESPONDANT

(30) Priority: 14.09.2021 PT 2021117462
(43) Date of publication of application: 15.03.2023
(73) Proprietor: Irreverentdragon, Lda, 4455-530 Perafita (PT)
(72) Inventor: DA FONSECA ARAÚJO MATOS, DIOGO, 4450-772 MATOSINHOS (PT)
(74) Representative: Patentree

(56) References cited:
- WO-A1-2011/034702
- CN-A- 111 559 213
- FR-A1- 2 884 795
- FR-A5- 2 040 840
- GB-A- 2 314 306

## Description

### TECHNICAL FIELD

The present disclosure relates to a rolling damper, respective suspension system that works with the rolling/asymmetric movement separately from the vertical/symmetrical movement of the car. Exemplary roll damper assemblies are disclosed in GB 2 314 306 A and in CN 111 559 213 A. FR 2 884 795 A1 discloses a telescopic elastic control means with a a coil spring mounted between a slidable tension cup and a slidable compression cup. Both a compression and an extension of the device cause the coil spring to compress.

### BACKGROUND

EP1997655B1 discloses a suspension system that is to be installed in a vehicle, and more particularly to such a suspension system equipped with an electromagnetic actuator that functions as a shock absorber, useful for establishment of a suspension characteristic based on a so-called skyhook theory. EP1997655B1 discloses a spring-rate changing control.

US20200062067A1 discloses a method of on demand energy delivery to an active suspension system. The suspension system includes an actuator body, a hydraulic pump, an electric motor, a plurality of sensors, an energy storage facility, and a controller. The method includes disposing an active suspension system in a vehicle between a wheel mount and a vehicle body, detecting a wheel event requiring control of the active suspension; and sourcing energy from the energy storage facility and delivering it to the electric motor in response to the wheel event.

Some of the sector's competitors but only with solutions / products in the traditional format: WO2011034702 discloses a hydraulic anti-roll system for a vehicle including a first hydraulic actuator, a second hydraulic actuator, an anti-roll control module, and an anti-roll bypass valve. The first hydraulic actuator is adapted to be connected between the suspension and frame of the vehicle on one side and the second hydraulic actuator is adapted to be connected between the suspension and frame of the vehicle on its other side. The anti-roll control module is connected between the fluid lines of the first and second hydraulic actuators. The anti-roll control module stiffens the compression of the first hydraulic actuator relative to the expansion of the second hydraulic actuator, and stiffens the compression of the second hydraulic actuator relative to the expansion of the first hydraulic actuator. The anti-roll bypass valve is adapted to activate and deactivate the stiffening of the anti-roll control module.

US20040195796A1 discloses a decoupled anti-roll system. This solution with the same type of objective but with a much more complex installation using hydraulic connection and a clutch mounted to separate anti-roll bars.

US20040265169A1 discloses an inspection tester that can be used anywhere as a primary screening tool by non-technical personnel to determine whether a surface contains explosives. - Solution for a decoupled suspension that uses the principle of active suspension.

US20140116243A1 discloses a hydraulic actuator assembly including an actuator, a first sink subsystem in fluid communication with an upper working chamber of the actuator, a second sink subsystem in fluid communication with a lower working chamber of the actuator and a source subsystem in fluid communication with both the upper and lower working chambers of the actuator. This solution for a decoupled suspension uses the principle of active suspension.

These facts are disclosed in order to illustrate the technical problem addressed by the present disclosure.

### GENERAL DESCRIPTION

This disclosure proposes a suspension system that works with the rolling /asymmetric movement separately from the vertical/symmetrical movement of the car.

The idea and concept behind this disclosure is based on the fact that this is achieved only with two dampers in which one dampens the Vertical / Symmetrical movement and the other, through an innovative mechanical system, is able to absorb the asymmetric compression movement when the car tilts and expanding when the car returns to its normal position, both ways.

Based on this principle, a normally mounted damper always has a hysteresis between the movement in compression (bump) and expansion (rebound) and the force that results from that movement.

If a conventional shock absorber is fitted to control the rolling motion of the car (angle α) then we will have a difference in damping when the rolling is clockwise or counterclockwise.

In addition to the problem of having a different operation depending on the vehicle curving to one side or the other, the adjustment of the damping is extremely complex and without guarantees of ensuring that they do not increase the unequal behavior depending on the direction of rolling.

With our system the shock absorber starts to work independently of the direction of the rolling, that is, whether the rolling happens in the clockwise direction or contrary to the clockwise, the increase in rolling always happens in the compression phase of the roll damper and the reduction of the rolling (returning to the initial position) always happens in the expansion phase of the damper.

In addition to guaranteeing a symmetry of behavior in the two rolling directions, we managed to make it possible to regulate the rolling's damping easily and with guarantees that we only affect the behavior we want (damping of the rolling increase or rolling decrease).

The present disclosure is advantageous, in particular, for:
Independently control the symmetrical movements of an axis with the asymmetric movements of an axis;
Independently control the damping of the increase of the rolling angle or the decrease of the rolling angle;
Ensure that the suspension works perfectly symmetrically;
Decrease the number of parts of the complete suspension, its weight and the occupied volume;
A suspension system that is easily operated in maintenance and easy to adjust or tuning.

It is disclosed a roll damper assembly for a vehicle suspension, comprising: a first bracket comprising a first inner bracket and a first outer bracket; a second bracket comprising a second inner bracket and a second outer bracket; a roll damper mounted between the first inner bracket and the second inner bracket; a first mount coupled to the first outer bracket and a second mount coupled to the second outer bracket, for mounting the roll damper assembly to the vehicle suspension; a first guide rod attached at a first end to the first outer bracket, and slidably attached to the inner second bracket for traversing the inner second bracket at a second end of the first guide rod; a second guide rod attached at a first end to the second outer bracket, and slidably attached to the inner first bracket for traversing the inner first bracket at a second end of the second guide rod; a first end stopper mounted on the second end of said first guide rod to stop the second end of said first guide rod from exiting from the slidable attachment to the inner second bracket; a second end stopper mounted on the second end of said second guide rod to stop the second end of said second guide rod from exiting from the slidable attachment to the inner first bracket.

In an embodiment, the roll damper assembly further comprises a first rocker arm coupled to the first mount and a second rocker arm coupled to the second mount for incorporating the roll damper assembly to the vehicle suspension.

In an embodiment, the roll damper assembly further comprises a heave damper mounted between said first and second rockers.

In an embodiment, the roll damper assembly further comprises two roll damper couplings mounted between the inner first and second brackets to receive the roll damper.

In an embodiment, the roll damper assembly comprises a third guide rod attached at the first end to the first outer bracket, and slidably attached to the inner second bracket for traversing the inner second bracket at a second end of the first guide rod; a fourth guide rod attached at the first end to the second outer bracket, and slidably attached to the inner first bracket for traversing the inner first bracket at a second end of the second guide rod; a third end stopper mounted on the second end of said first guide rod to stop the second end of said first guide rod from exiting from the slidable attachment to the inner second bracket; a fourth end stopper mounted on the second end of said second guide rod to stop the second end of said second guide rod from exiting from the slidable attachment to the inner first bracket.

It is also disclosed a vehicle suspension comprising one or more roll damper assemblies according to any of the previous embodiments.

It is also disclosed a vehicle comprising a vehicle suspension according to the previous embodiment.

It is also disclosed a mounting method of a roll damper assembly according to any of the previous embodiments comprising: mounting the roll damper assembly to the vehicle suspension by the first and second mounts; assembling the roll damper by bolting the damper to the inner brackets, while the spring is loose on the damper.

In an embodiment, the spring is adjusted to have no preload.

In an embodiment, the step of assembling of a heave damper by bolting said heave damper to said first and second rockers, while a spring of said heave damper is loose on the damper.

In an embodiment, the assembling of the heave damper is made after the roll damper is assembled.

In an embodiment, the spring of said heave damper is adjusted to have no preload.

It is also disclosed a manufacturing method of a roll damper assembly for a vehicle suspension, comprising: providing a first bracket comprising a first inner bracket and a first outer bracket; providing a second bracket comprising a second inner bracket and a second outer bracket; mounting a roll damper mounted between the first inner bracket and the second inner bracket; mounting a first mount coupled to the first outer bracket and a second mount coupled to the second outer bracket, for mounting the roll damper assembly to the vehicle suspension; attaching a first guide rod at a first end to the first outer bracket, and slidably attached to the inner second bracket for traversing the inner second bracket at a second end of the first guide rod; attaching a second guide rod at a first end to the second outer bracket, and slidably attached to the inner first bracket for traversing the inner first bracket at a second end of the second guide rod; mounting a first end stopper on the second end of said first guide rod to stop the second end of said first guide rod from exiting from the slidable attachment to the inner second bracket; mounting a second end stopper on the second end of said second guide rod to stop the second end of said second guide rod from exiting from the slidable attachment to the inner first bracket.

In an embodiment, the manufacturing method further comprising coupling a first rocker arm to the first mount and a second rocker arm coupled to the second mount for incorporating the roll damper assembly to the vehicle suspension.

In an embodiment, the manufacturing method further comprising mounting a heave damper between said first and second rockers.

### BRIEF DESCRIPTION OF THE DRAWINGS

The following figures provide preferred embodiments for illustrating the disclosure and should not be seen as limiting the scope of invention.
**Figure 1****:** Schematic representation of an embodiment of a suspension system.
**Figure 2****:** Schematic representation of an embodiment of a conventional suspension system.
**Figure 3****:** Schematic representation of an embodiment of a suspension system with the disclosed rolling damper.
**Figure 4****:** Schematic representation of an embodiment of a suspension system with the disclosed rolling damper, where:
   (1) represents a first suspension rocker;
   (2) represents a second suspension rocker;
   (3) represents a first mounting bracket;
   (4) represents linear guide rods;
   (5) represents a damper mounting bracket;
   (6) represents an end stop cap;
   (7) represents a lower mounting point for the roll damper;
   (8) represents a second mounting bracket;
   (9) represents a heave damper mounting bracket;
   (10) represents a heave damper;
   (11) represents a rolling damper.

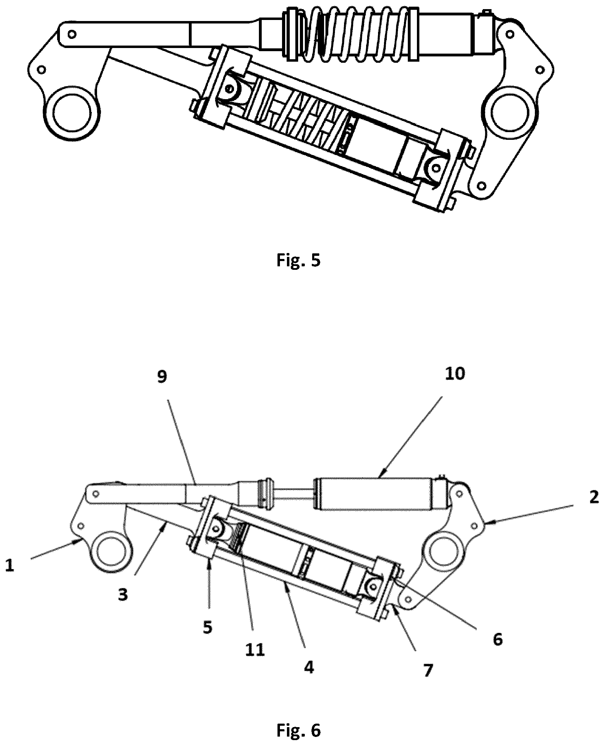

**Figure 5****:** Schematic representation of an embodiment of a suspension system with the disclosed rolling damper with visible springs.
**Figure 6****:** Schematic representation of an embodiment of a a suspension system with the disclosed rolling damper.

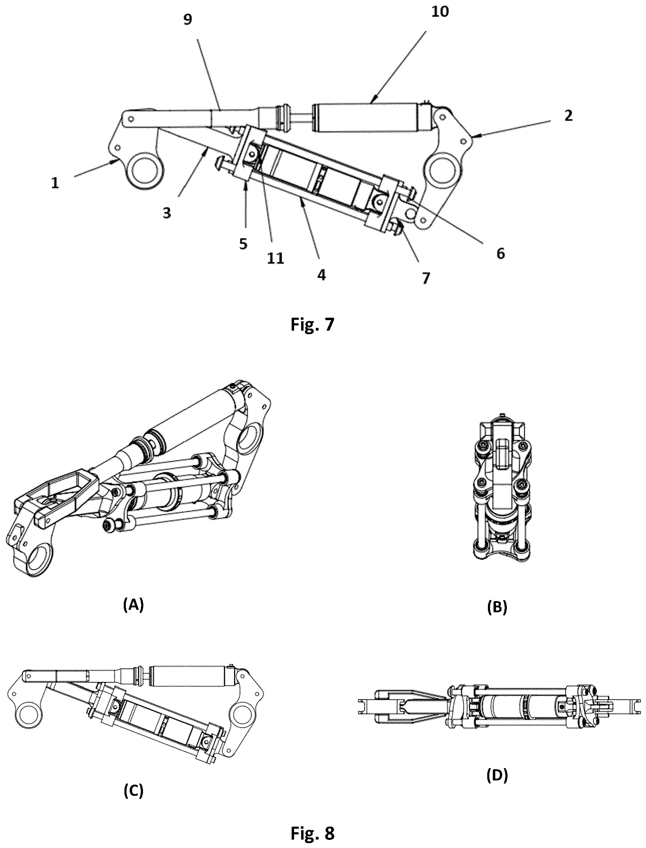

**Figure 7****:** Schematic representation of an embodiment of a suspension system with the disclosed rolling damper.
**Figure 8****:** Schematic representation of an embodiment of a suspension system, where:
   (A) represents a perspective view of the assembly;
   (B) represents an end view of the assembly;
   (C) represents a lateral view of the assembly;
   (D) represents a top view of the assembly.

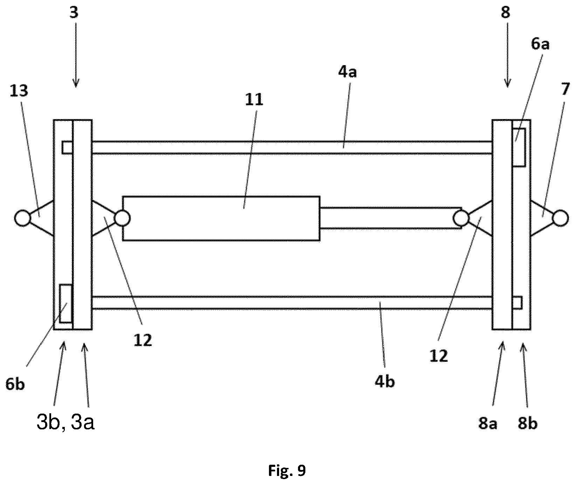

**Figure 9****:** Schematic representation of an embodiment of a suspension system,
   where:
   (3) represents a first bracket;
   (3a) represents a first inner bracket;
   (3b) represents a first outer bracket;
   (4a) represents a first guide rod;
   (4b) represents a second guide rod;
   (6a) represents a first end stopper;
   (6b) represents a second end stopper;
   (7) represents a second rocker arm;
   (8) represents a second bracket;
   (8a) represents a second inner bracket;
   (8b) represents a second outer bracket;
   (11) represents a roll damper;
   (12) represents a roll damper coupling;
   (13) represents a first rocker arm.

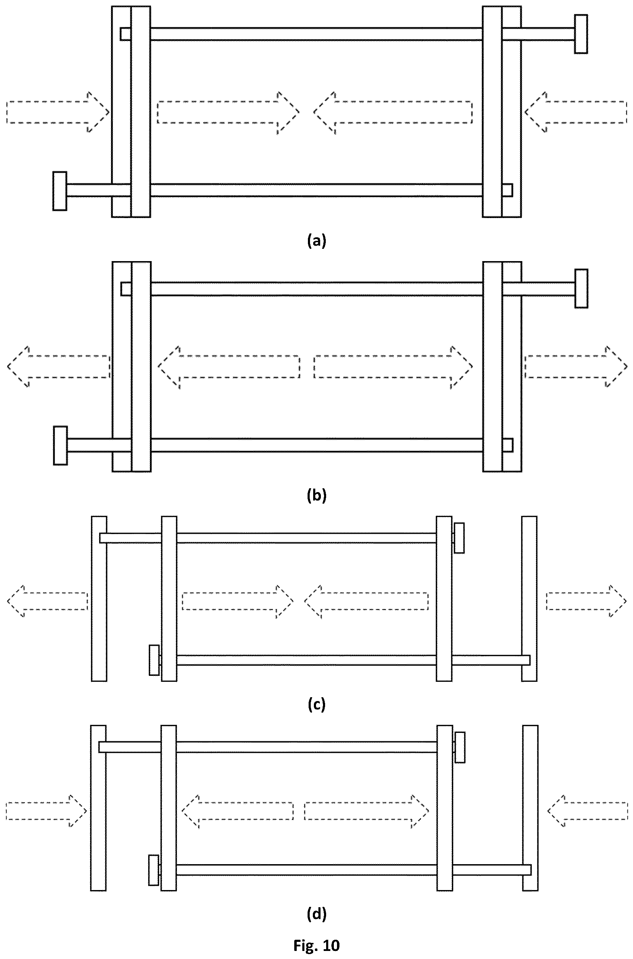

**Figure 10****:** Schematic representation of an embodiment of a suspension system, where:
   (a) represents a traditional movement with a hysteresis between motion in compression (bump) and expansion (rebound) and the force that results from that movement for compressing;
   (b) represents a traditional movement with a hysteresis between motion in compression (bump) and expansion (rebound) and the force that results from that movement for dropping;
   (c) represents a movement of the present disclosure with a hysteresis between motion in compression (bump) and expansion (rebound) and the force that results from that movement for dropping;
   (d) represents a movement of the present disclosure with a hysteresis between motion in compression (bump) and expansion (rebound) and the force that results from that movement for compressing.

### DETAILED DESCRIPTION

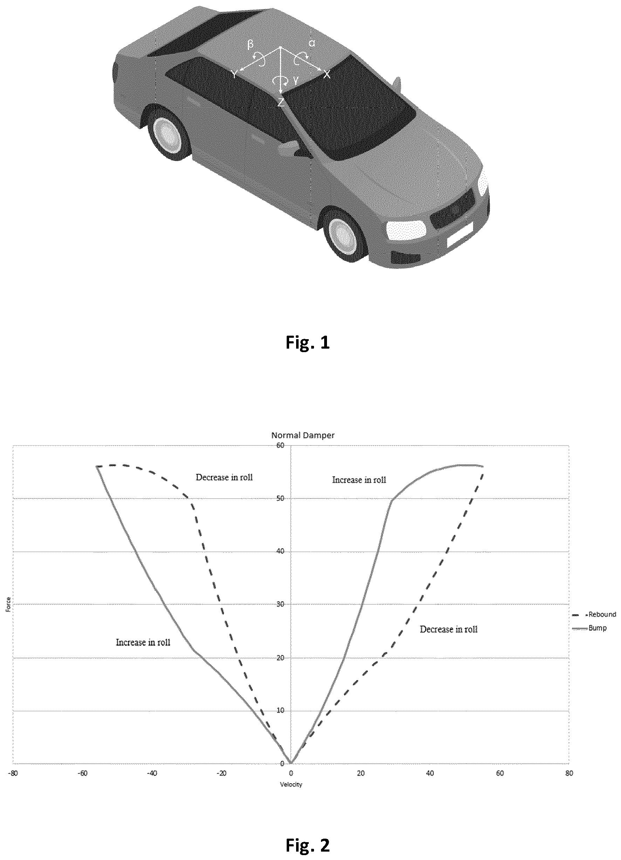

**Figure 1** shows a schematic representation of an embodiment of a suspension system. The suspension system of the present disclosure can work with the rolling/asymmetric movement separately from the vertical/symmetrical movement of the automobile. This disclosure is a rolling damper only with two dampers where one damper dampens the Vertical/Symmetrical movement and the other, through an innovative mechanical system, manages to absorb the asymmetric movement in compression, when the car tilts and expanding when the car returns.

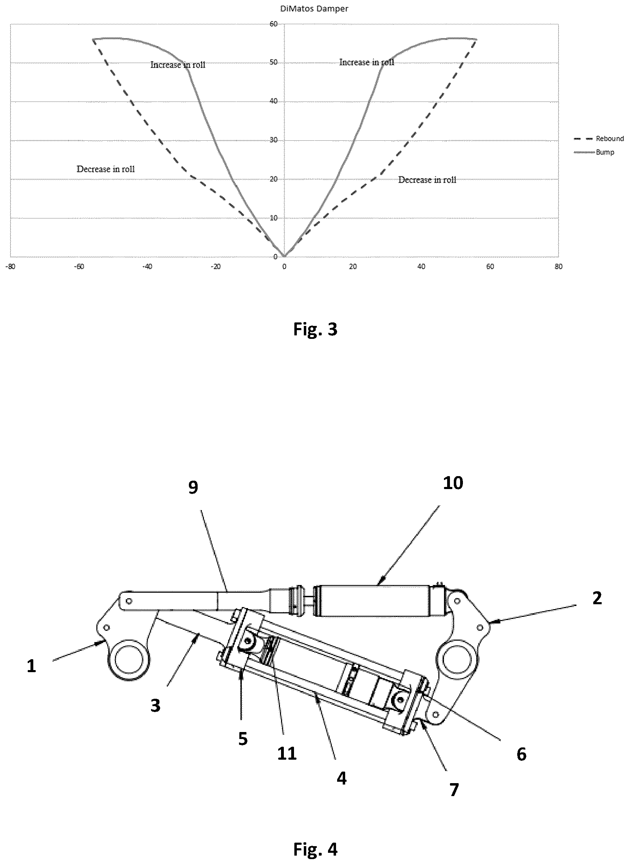

**Figure 2** shows a schematic representation of an embodiment of a conventional suspension system. **Figure 3** shows a schematic representation of an embodiment of a suspension system with the disclosed rolling damper.

**Figure 4** shows a schematic representation of a roll damper assembly for a vehicle suspension where **5** represents a first bracket comprising a first inner bracket and a first outer bracket; **6** represents a second bracket comprising a second inner bracket and a second outer bracket; **11** represents a roll damper mounted between the first inner bracket and the second inner bracket; **3** represents a first mount coupled to the first outer bracket and **7** represents a second mount coupled to the second outer bracket, for mounting the roll damper assembly to the vehicle suspension; **4** represents a first guide rod attached at a first end to the first outer bracket, and slidably attached to the inner second bracket for traversing the inner second bracket at a second end of the first guide rod.

**Figure 5** shows a schematic representation of a suspension system with the disclosed rolling damper with visible springs.

**Figure 6** **and** **7** show a schematic representation of a suspension system with the disclosed rolling damper.

**Figure 8** shows a schematic representation of a suspension system, where: (A) represents a perspective view of the assembly; (B) represents an end view of the assembly; (C) represents a lateral view of the assembly; (D) represents a top view of the assembly.

**Figure 9** shows a schematic representation of an embodiment of a suspension system, where: **3** represents a first bracket; **3a** represents a first inner bracket; **3b** represents a first outer bracket; **4a** represents a first guide rod; **4b** represents a second guide rod; **6a** represents a first end stopper; **6b** represents a second end stopper; **7** represents a second rocker arm; **8** represents a second bracket; **8a** represents a second inner bracket; **8b** represents a second outer bracket; **11** represents a roll damper; **12** represents a roll damper coupling; **13** represents a first rocker arm.

**Figure 10** shows a schematic representation of a suspension system, where: (a) represents a traditional movement with a hysteresis between motion in compression (bump) and expansion (rebound) and the force that results from that movement for compressing; (b) represents a traditional movement with a hysteresis between motion in compression (bump) and expansion (rebound) and the force that results from that movement for dropping; (c) represents a movement of the present disclosure with a hysteresis between motion in compression (bump) and expansion (rebound) and the force that results from that movement for dropping; (d) represents a movement of the present disclosure with a hysteresis between motion in compression (bump) and expansion (rebound) and the force that results from that movement for compressing.

The term "comprising" whenever used in this document is intended to indicate the presence of stated features, integers, steps, components, but not to preclude the presence or addition of one or more other features, integers, steps, components or groups thereof. The disclosure should not be seen in any way restricted to the embodiments described and a person with ordinary skill in the art will foresee many possibilities to modifications thereof. The above-described embodiments are combinable. The following claims further set out particular embodiments of the disclosure.

## Claims

1. Roll damper assembly for a vehicle suspension, comprising:
a first bracket (3) comprising a first inner bracket (3a) and a first outer bracket (3b);
a second bracket (8) comprising a second inner bracket (8a) and a second outer bracket (8b);
a roll damper (11) mounted between the first inner bracket and the second inner bracket;
a first mount coupled to the first outer bracket and a second mount coupled to the second outer bracket, for mounting the roll damper assembly to the vehicle suspension;
a first guide rod (4a) attached at a first end to the first outer bracket, and slidably attached to the inner second bracket for traversing the inner second bracket at a second end of the first guide rod;
a second guide rod (4b) attached at a first end to the second outer bracket, and slidably attached to the inner first bracket for traversing the inner first bracket at a second end of the second guide rod;
a first end stopper (6a) mounted on the second end of said first guide rod to stop the second end of said first guide rod from exiting from the slidable attachment to the inner second bracket;
a second end stopper (6b) mounted on the second end of said second guide rod to stop the second end of said second guide rod from exiting from the slidable attachment to the inner first bracket.

2. Roll damper assembly according to the previous claim comprising a first rocker arm (13) coupled to the first mount and a second rocker arm (7) coupled to the second mount for incorporating the roll damper assembly to the vehicle suspension.

3. Roll damper assembly according to the previous claim further comprising a heave damper (10) mounted between said first and second rockers.

4. Roll damper assembly according to any of the previous claims comprising two roll damper couplings (12) mounted between the inner first and second brackets to receive the roll damper.

5. Roll damper assembly according to any of the previous claims comprising:
a third guide rod attached at the first end to the first outer bracket, and slidably attached to the inner second bracket for traversing the inner second bracket at a second end of the first guide rod;
a fourth guide rod attached at the first end to the second outer bracket, and slidably attached to the inner first bracket for traversing the inner first bracket at a second end of the second guide rod;
a third end stopper mounted on the second end of said first guide rod to stop the second end of said first guide rod from exiting from the slidable attachment to the inner second bracket;
a fourth end stopper mounted on the second end of said second guide rod to stop the second end of said second guide rod from exiting from the slidable attachment to the inner first bracket.

6. Vehicle suspension comprising one or more roll damper assemblies according to any of the previous claims.

7. Vehicle comprising a vehicle suspension according to the previous claim.

8. Mounting method of a roll damper assembly according to any of the previous claims 1- 5 comprising: mounting the roll damper assembly to the vehicle suspension by the first and second mounts; assembling the roll damper by bolting the damper to the inner brackets, while the spring is loose on the damper.

9. Mounting method of a roll damper assembly according to the previous claim, wherein the spring is adjusted to have no preload.

10. Mounting method of a roll damper assembly according to any of the claims 6 -7 further comprising the step of assembling of a heave damper by bolting said heave damper to said first and second rockers, while a spring of said heave damper is loose on the damper.

11. Mounting method of a roll damper assembly according to the previous claim, wherein the assembling of the heave damper is made after the roll damper is assembled.

12. Mounting method of a roll damper assembly according to any of the claims 8 - 9, the spring of said heave damper is adjusted to have no preload.

13. Manufacturing method of a roll damper assembly for a vehicle suspension, comprising:
providing a first bracket comprising a first inner bracket and a first outer bracket;
providing a second bracket comprising a second inner bracket and a second outer bracket;
mounting a roll damper mounted between the first inner bracket and the second inner bracket;
mounting a first mount coupled to the first outer bracket and a second mount coupled to the second outer bracket, for mounting the roll damper assembly to the vehicle suspension;
attaching a first guide rod at a first end to the first outer bracket, and slidably attached to the inner second bracket for traversing the inner second bracket at a second end of the first guide rod;
attaching a second guide rod at a first end to the second outer bracket, and slidably attached to the inner first bracket for traversing the inner first bracket at a second end of the second guide rod;
mounting a first end stopper on the second end of said first guide rod to stop the second end of said first guide rod from exiting from the slidable attachment to the inner second bracket;
mounting a second end stopper on the second end of said second guide rod to stop the second end of said second guide rod from exiting from the slidable attachment to the inner first bracket.

14. Manufacturing method according to the previous claim comprising coupling a first rocker arm to the first mount and a second rocker arm coupled to the second mount for incorporating the roll damper assembly to the vehicle suspension.

15. Manufacturing method according to the previous claim further comprising mounting a heave damper between said first and second rockers.

## Patentansprüche

1. Rolldämpferanordnung für eine Fahrzeugfederung, umfassend:
eine erste Halterung (3), umfassend eine erste innere Halterung (3a) und eine erste äußere Halterung (3b);
eine zweite Halterung (8), umfassend eine zweite innere Halterung (8a) und eine zweite äußere Halterung (8b);
einen Rolldämpfer (11), der zwischen der ersten inneren Halterung und der zweiten inneren Halterung montiert ist;
eine erste Stütze, die mit der ersten äußeren Halterung verbunden ist, und eine zweite Stütze, die mit der zweiten äußeren Halterung verbunden ist, um die Rolldämpferanordnung an der Fahrzeugfederung zu montieren;
eine erste Führungsstange (4a), die an einem ersten Ende an der ersten äußeren Halterung befestigt ist, und verschiebbar an der inneren zweiten Halterung befestigt ist, um die innere zweite Halterung an einem zweiten Ende der ersten Führungsstange zu durchqueren;
eine zweite Führungsstange (4b), die an einem ersten Ende an der zweiten äußeren Halterung befestigt ist, und verschiebbar an der inneren ersten Halterung befestigt ist, um die innere erste Halterung an einem zweiten Ende der zweiten Führungsstange zu durchqueren;
einen ersten Anschlag (6a), der an dem zweiten Ende der genannten ersten Führungsstange montiert ist, um zu verhindern, dass sich das zweite Ende der genannten ersten Führungsstange aus der verschiebbaren Befestigung an der inneren zweiten Halterung bewegt;
einen zweiten Anschlag (6b), der an dem zweiten Ende der genannten zweiten Führungsstange montiert ist, um zu verhindern, dass sich das zweite Ende der genannten zweiten Führungsstange aus der verschiebbaren Befestigung an der inneren ersten Halterung bewegt.

2. Rolldämpferanordnung nach dem vorangehenden Anspruch, umfassend einen ersten Kipphebel (13), der mit der ersten Stütze verbunden ist, und einen zweiten Kipphebel (7), der mit der zweiten Stütze verbunden ist, um die Rolldämpferanordnung mit der Fahrzeugfederung zu verbinden.

3. Rolldämpferanordnung nach dem vorangehenden Anspruch, ferner umfassend einen Hubdämpfer (10), der zwischen dem genannten ersten und zweiten Kipphebel montiert ist.

4. Rolldämpferanordnung nach einem der vorangehenden Ansprüche, umfassend zwei Rolldämpferkupplungen (12), die zwischen der inneren ersten und zweiten Halterung montiert sind, um den Rolldämpfer aufzunehmen.

5. Rolldämpferanordnung nach einem der vorangehenden Ansprüche, umfassend:
eine dritte Führungsstange, die an dem ersten Ende an der ersten äußeren Halterung befestigt ist, und verschiebbar an der inneren zweiten Halterung befestigt ist, um die innere zweite Halterung an einem zweiten Ende der ersten Führungsstange zu durchqueren;
eine vierte Führungsstange, die an dem ersten Ende an der zweiten äußeren Halterung befestigt ist, und verschiebbar an der inneren ersten Halterung befestigt ist, um die innere erste Halterung an einem zweiten Ende der zweiten Führungsstange zu durchqueren;
einen dritten Anschlag, der an dem zweiten Ende der genannten ersten Führungsstange montiert ist, um zu verhindern, dass sich das zweite Ende der genannten ersten Führungsstange aus der verschiebbaren Befestigung an der inneren zweiten Halterung bewegt;
einen vierten Anschlag, der an dem zweiten Ende der genannten zweiten Führungsstange montiert ist, um zu verhindern, dass sich das zweite Ende der genannten zweiten Führungsstange aus der verschiebbaren Befestigung an der inneren ersten Halterung bewegt.

6. Fahrzeugfederung umfassend eine oder mehrere Rolldämpferanordnungen nach einem der vorangehenden Ansprüche.

7. Fahrzeug, umfassend eine Fahrzeugfederung nach dem vorangehenden Anspruch.

8. Montageverfahren für eine Rolldämpferanordnung nach einem der vorangehenden Ansprüche 1-5, umfassend: Montieren der Rolldämpferanordnung an der Fahrzeugfederung mit der ersten und zweiten Stütze; Montieren des Rolldämpfers durch Verschrauben des Dämpfers mit den inneren Halterungen, während die Feder lose auf dem Dämpfer sitzt.

9. Montageverfahren für eine Rolldämpferanordnung nach dem vorangehenden Anspruch, wobei die Feder so eingestellt ist, dass sie keine Vorspannung aufweist.

10. Montageverfahren für eine Rolldämpferanordnung nach einem der Ansprüche 6-7, ferner umfassend den Schritt der Montage eines Hubdämpfers durch Verschrauben des genannten Hubdämpfers mit dem genannten ersten und zweiten Kipphebel, während eine Feder des genannten Hubdämpfers lose auf dem Dämpfer sitzt.

11. Montageverfahren einer Rolldämpferanordnung nach dem vorangehenden Anspruch, wobei die Montage des Hubdämpfers nach der Montage des Rolldämpfers erfolgt.

12. Montageverfahren für eine Rolldämpferanordnung nach einem der Ansprüche 8-9, wobei die Feder des genannten Hubdämpfers so eingestellt ist, dass sie keine Vorspannung aufweist.

13. Verfahren zur Herstellung einer Rolldämpferanordnung für eine Fahrzeugfederung, umfassend:
Bereitstellen einer ersten Halterung, umfassend eine erste innere Halterung und eine erste äußere Halterung;
Bereitstellen einer zweiten Halterung, umfassend eine zweite innere Halterung und eine zweite äußere Halterung;
Montage eines Rolldämpfers, der zwischen der ersten inneren Halterung und der zweiten inneren Halterung montiert ist;
Montage einer ersten Stütze, die mit der ersten äußeren Halterung verbunden ist, und eine zweite Stütze, die mit der zweiten äußeren Halterung verbunden ist, um die Rolldämpferanordnung an der Fahrzeugfederung zu montieren;
Befestigen einer ersten Führungsstange, die an einem ersten Ende an der ersten äußeren Halterung befestigt ist, und verschiebbar an der inneren zweiten Halterung befestigt ist, um die innere zweite Halterung an einem zweiten Ende der ersten Führungsstange zu durchqueren;
Befestigen einer zweiten Führungsstange, die an einem ersten Ende an der zweiten äußeren Halterung befestigt ist, und verschiebbar an der inneren ersten Halterung befestigt ist, um die innere erste Halterung an einem zweiten Ende der zweiten Führungsstange zu durchqueren;
Montieren eines ersten Anschlags, der an dem zweiten Ende der genannten ersten Führungsstange angebracht ist, um zu verhindern, dass sich das zweite Ende der genannten ersten Führungsstange aus der verschiebbaren Befestigung an der inneren zweiten Halterung bewegt;
Montieren eines zweiten Anschlags, der an dem zweiten Ende der genannten zweiten Führungsstange angebracht ist, um zu verhindern, dass sich das zweite Ende der genannten zweiten Führungsstange aus der verschiebbaren Befestigung an der inneren ersten Halterung bewegt.

14. Herstellungsverfahren nach dem vorangehenden Anspruch, umfassend einen ersten Kipphebel, der mit der ersten Stütze verbunden ist, und einem zweiten Kipphebel, der mit der zweiten Stütze verbunden ist, um die Rolldämpferanordnung mit der Fahrzeugfederung zu verbinden.

15. Herstellungsverfahren nach dem vorangehenden Anspruch, ferner umfassend das Montieren eines Hubdämpfers zwischen dem genannten ersten und zweiten Kipphebel.

## Revendications

1. Ensemble d'amortisseur de roulement pour une suspension de véhicule, comprenant :
une première patte de fixation (3) comprenant une première patte de fixation interne (3a) et une première patte de fixation externe (3b) ;
une seconde patte de fixation (8) comprenant une seconde patte de fixation interne (8a) et une seconde patte de fixation externe (8b) ;
un amortisseur de roulement (11) monté entre la première patte de fixation interne et la seconde patte de fixation interne ;
un premier support accouplé à la première patte de fixation externe et un second support accouplé à la seconde patte de fixation externe, pour monter l'ensemble d'amortisseur de roulement à la suspension de véhicule ;
une première tige de guidage (4a) attachée par une première extrémité à la première patte de fixation externe, et attachée de manière coulissante à la seconde patte de fixation interne pour traverser la seconde patte de fixation interne à une seconde extrémité de la première tige de guidage ;
une seconde tige de guidage (4b) attachée par une première extrémité à la seconde patte de fixation externe, et attachée de manière coulissante à la première patte de fixation interne pour traverser la première patte de fixation interne à une seconde extrémité de la seconde tige de guidage ;
un premier bouchon d'extrémité (6a) monté sur la seconde extrémité de ladite première tige de guidage pour empêcher la seconde extrémité de ladite première tige de guidage de sortir de l'attache coulissante vers la seconde patte de fixation interne ;
un second bouchon d'extrémité (6b) monté sur la seconde extrémité de ladite seconde tige de guidage pour empêcher la seconde extrémité de ladite seconde tige de guidage de sortir de l'attache coulissante vers la première patte de fixation interne.

2. Ensemble d'amortisseur de roulement selon la revendication précédente comprenant un premier culbuteur (13) accouplé au premier support et un second culbuteur (7) accouplé au second support pour incorporer l'ensemble d'amortisseur de roulement à la suspension de véhicule.

3. Ensemble d'amortisseur de roulement selon la revendication précédente comprenant également un amortisseur de soulèvement (10) monté entre lesdits premier et second culbuteurs.

4. Ensemble d'amortisseur de roulement selon l'une quelconque des revendications précédentes comprenant deux accouplements d'amortisseur de roulement (12) montés entre la première et la seconde patte de fixation interne pour recevoir l'amortisseur de roulement.

5. Ensemble d'amortisseur de roulement selon l'une quelconque des revendications précédentes comprenant :
une troisième tige de guidage attachée par la première extrémité à la première patte de fixation externe, et attachée de manière coulissante à la seconde patte de fixation interne pour traverser la seconde patte de fixation interne à une seconde extrémité de la première tige de guidage ;
une quatrième tige de guidage attachée par la première extrémité à la seconde patte de fixation externe, et attachée de manière coulissante à la première patte de fixation interne pour traverser la première patte de fixation interne à une seconde extrémité de la seconde tige de guidage ;
un troisième bouchon d'extrémité monté sur la seconde extrémité de ladite première tige de guidage pour empêcher la seconde extrémité de ladite première tige de guidage de sortir de l'attache coulissante vers la seconde patte de fixation interne ;
un quatrième bouchon d'extrémité monté sur la seconde extrémité de ladite seconde tige de guidage pour empêcher la seconde extrémité de ladite seconde tige de guidage de sortir de l'attache coulissante vers la première patte de fixation interne.

6. Suspension de véhicule comprenant un ou plusieurs ensembles d'amortisseur de roulement selon l'une quelconque des revendications précédentes.

7. Véhicule comprenant une suspension de véhicule selon la revendication précédente.

8. Procédé de montage d'un ensemble d'amortisseur de roulement selon l'une quelconque des revendications 1-5 comprenant : monter l'ensemble d'amortisseur de roulement sur la suspension de véhicule à travers le premier et le second supports ; assembler l'amortisseur de roulement en boulonnant l'amortisseur aux pattes de fixation internes, pendant que le ressort est libre sur l'amortisseur.

9. Procédé de montage d'un ensemble d'amortisseur de roulement selon la revendication précédente, dans lequel le ressort est ajusté pour ne pas avoir de précharge.

10. Procédé de montage d'un ensemble d'amortisseur de roulement selon l'une quelconque des revendications 6-7 comprenant également l'étape d'assemblage d'un amortisseur de soulèvement en boulonnant ledit amortisseur de soulèvement auxdits premier et second culbuteurs, pendant qu'un ressort dudit amortisseur de soulèvement est libre sur l'amortisseur.

11. Procédé de montage d'un ensemble d'amortisseur de roulement selon la revendication précédente, dans lequel l'assemblage de l'amortisseur de soulèvement est effectué après que l'amortisseur de roulement ait été assemblé.

12. Procédé de montage d'un ensemble d'amortisseur de roulement selon l'une quelconque des revendications 8-9, le ressort dudit amortisseur de soulèvement étant ajusté pour ne pas avoir de précharge.

13. Procédé de fabrication d'un ensemble d'amortisseur de roulement pour une suspension de véhicule, comprenant :
fournir une première patte de fixation comprenant une première patte de fixation interne et une première patte de fixation externe ;
fournir une seconde patte de fixation comprenant une seconde patte de fixation interne et une seconde patte de fixation externe ;
monter un amortisseur de roulement monté entre la première patte de fixation interne et la seconde patte de fixation interne ;
monter un premier support accouplé à la première patte de fixation externe et un second support accouplé à la seconde patte de fixation externe, pour monter l'ensemble d'amortisseur de roulement à la suspension de véhicule ;
attacher une première tige de guidage par une première extrémité à la première patte de fixation externe, attachée de manière coulissante à la seconde patte de fixation interne pour traverser la seconde patte de fixation interne à une seconde extrémité de la première tige de guidage ;
attacher une seconde tige de guidage par une première extrémité à la seconde patte de fixation externe, attachée de manière coulissante à la première patte de fixation interne pour traverser la première patte de fixation interne à une seconde extrémité de la seconde tige de guidage ;
monter un premier bouchon d'extrémité sur la seconde extrémité de ladite première tige de guidage pour empêcher la seconde extrémité de ladite première tige de guidage de sortir de l'attache coulissante vers la seconde patte de fixation interne ;
monter un second bouchon d'extrémité sur la seconde extrémité de ladite seconde tige de guidage pour empêcher la seconde extrémité de ladite seconde tige de guidage de sortir de l'attache coulissante vers la première patte de fixation interne.

14. Procédé de fabrication selon la revendication précédente comprenant l'accouplement d'un premier culbuteur au premier support et l'accouplement d'un second culbuteur au second support pour incorporer l'ensemble d'amortisseur de roulement à la suspension de véhicule.

15. Procédé de fabrication selon la revendication précédente comprenant également le montage d'un amortisseur de soulèvement entre lesdits premier et second culbuteurs.
